**Europäisches Patentamt**

**European Patent Office**

**Office européen des brevets**

(19)

(11) Veröffentlichungsnummer : **0 326 808 B1**

(12) # EUROPÄISCHE PATENTSCHRIFT

(45) Veröffentlichungstag der Patentschrift :
**25.03.92 Patentblatt 92/13**

(51) Int. Cl.$^5$ : **H02B 1/04**

(21) Anmeldenummer : **89100198.4**

(22) Anmeldetag : **07.01.89**

(54) **Richtplatte zur parallelen Ausrichtung des Frontrahmens von Schaltern.**

(30) Priorität : **01.02.88 CH 330/88**

(43) Veröffentlichungstag der Anmeldung :
**09.08.89 Patentblatt 89/32**

(45) Bekanntmachung des Hinweises auf die
Patenterteilung :
**25.03.92 Patentblatt 92/13**

(84) Benannte Vertragsstaaten :
**AT BE DE ES FR GB GR IT LU NL SE**

(56) Entgegenhaltungen :
**DE-A- 3 302 722**
**FR-A- 2 118 415**

(73) Patentinhaber : **Elektro-Apparatebau Olten AG**
**Tannwaldstrasse 88**
**CH-4600 Olten (CH)**

(72) Erfinder : **Berger, Fritz**
**Hofacker 381**
**CH-4625 Oberbuchsiten (CH)**

(74) Vertreter : **Fillinger, Peter, Dr.**
**Rütistrasse 1a**
**CH-5400 Baden (CH)**

## Beschreibung

Die vorliegende Erfindung bezieht sich auf eine Richtplatte gemäss dem Obergegriff des Anspruchs 1.

Eine derartige Richtplatte ist aus der DE-OS 33 02 722 bekannt. Sie besteht aus einem Blechstreifen in dem die Durchbrechungen mit gleichmässigem Abstand angeordnet sind. Daraus ergibt sich die Notwendigkeit in einer in eine Schalttafel eingebauten Schalterreihe stets den gleichen minimalen Abstand zwischen zwei benachbarten Schaltern oder ein ganzes Vielfaches davon zu wählen. Sind zwischen benachbarten Schaltern andere Masse erwünscht, müssen hierfür entsprechende Blechstreifen angefertigt oder an Lager gehalten werden.

Die vorliegende Erfindung stellt sich die Aufgabe, eine Richtplatte der erwähnten Art derart zu verbessern, dass der minimale Abstand zwischen benachbarten Schaltern innerhalb bestimmter Grenzen frei wählbar ist.

Erfindungsgemäss wird diese Aufgabe gelöst durch die kennzeichnenden Merkmale des Anspruchs 1.

Anhand der beiligenden schematischen Zeichnung wird die Erfindung beispielsweise erläutert. Es zeigen:

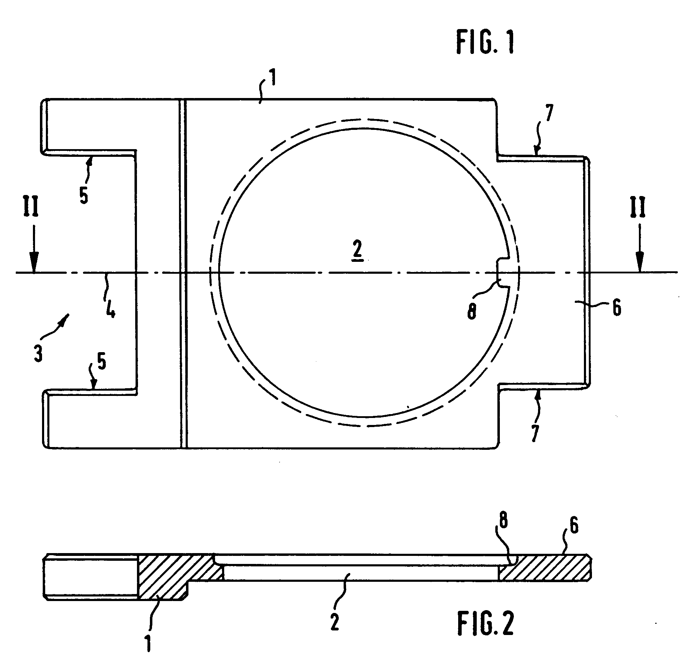

Fig. 1 eine Draufsicht auf eine Richtplatte,

Fig. 2 einen Schnitt längs der Linie II-II in Fig. 1,

Fig. 3 eine perspektivische Ansicht einer Schalttafel von hinten mit zwei eingebauten Schaltern, wobei an diesen Teile weggebrochen sind und

Fig. 4 eine Draufsicht auf Fig. 3.

Die Richtplatte 1 ist im wesentlichen eine rechteckige Platte mit einer Durchbrechung 2. Auf einer Seite der Richtplatte 1 ist eine Ausnehmung 3 angebracht, die symmetrisch zu einer Durchmesserlinie 4 parallele Flanken 5 bildet. Diametral gegenüberliegend springt eine zur Ausnehmung 3 kongruente Zunge 6 vor, die mit ihren zur Durchmesserlinie 4 symmetrischen Flanken 7 praktisch spielfrei zwischen die Flanken der Ausnehmung 3 einer benachbarten Richtplatte nach Art einer Nut und Federverbindung schiebbar ist.

In die Durchbrechung 2 ragt eine Führungsnase 8, welche mit einer entsprechenden Nut 9 an der Aussenseite eines Schaltergehäuses 10 zusammenwirkt, derart, dass ein durch die Durchbrechung 2 gestecktes Schaltergehäuse 10 verdrehfest in der Richtplatte 1 gehalten ist. Der Aussenquerschnitt des Schaltergehäuses 10 ist insoweit deckungsgleich mit der Durchbrechung 2, als das Schaltergehäuse mühelos durch die Richtplatte 1 hindurch gesteckt werden kann und ohne radiales Spiel darin verdrehfest gehalten ist.

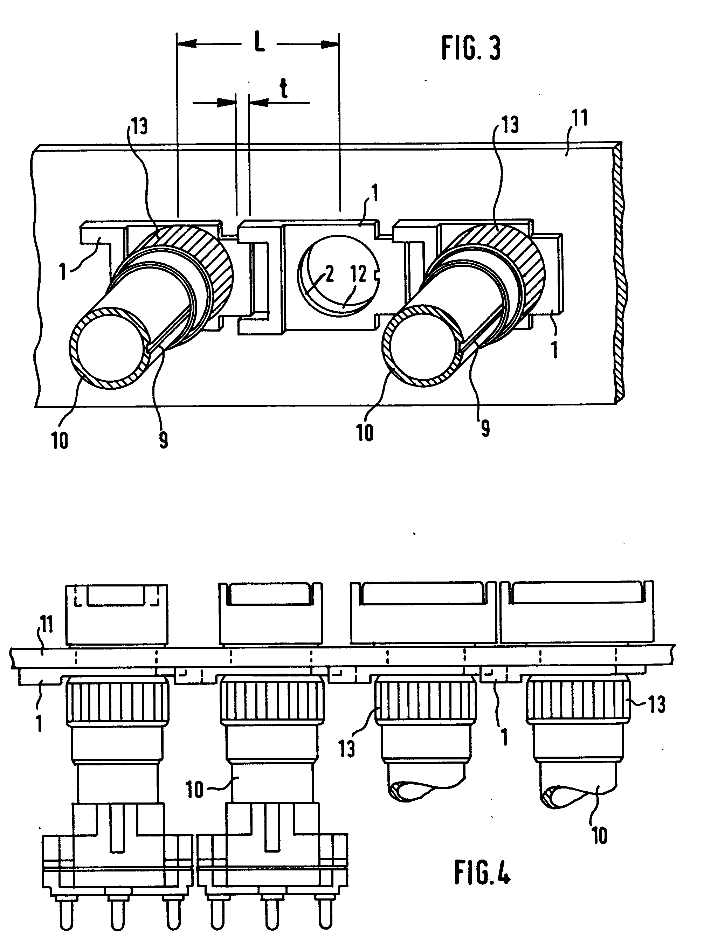

Sind in der Montageplatte 11 Bohrungen 12 für die Montage von Schaltern (deren Gehäuse mit 10 bezeichnet ist) angeordnet, so werden diese von der Frontseite durch die Bohrungen 12 und anschliessend durch die Durchbrechung 2 einer dazu koachsialen Richtplatte 1 geschoben (Fig. 3 und 4). Die Ausnehmung 3 bzw. die Zunge 6 benachbarter Richtplatten 1 greifen dabei ineinander, wodurch sämtliche Führungsnasen 8 bzw. Nuten 9 nach der gleichen Seite ausgerichtet sind. Entsprechend sind die Frontrahmen der eingebauten Schalter parallel zueinander orientiert. Durch ein Festziehen der Überwurfmuttern 13 werden die Schaltergehäuse 10 an der Montageplatte 11 fixiert, wodurch gleichzeitig die Richtplatten 1 festgespannt werden. Die nut- und federartige Verbindung zwischen zwei benachbarten Richtplatten 1 ermöglicht es, die Eintauchtiefe "t" einer Zunge 6 in eine Ausnehmung 3 zu variieren. Entsprechend ist es möglich, den Abstand "L" zwischen benachbarten Bohrungen 12 innerhalb bestimmter Grenzen beliebig zu variieren, ohne dass die einzelnen Richtplatten 1 ihre Fähigkeit zum Ausrichten der Schaltergehäuse 10 verlieren.

Die Dicke der Richtplatte 1 im Bereich der Ausnehmung 3 ist grösser als im Bereich der Durchbrechung 2 und der Zunge 6. Hierdurch wird vermieden, dass beim Festziehen der Überwurfmutter 13 sich die Flanken 5 verbiegen und das Schaltergehäuse verdreht wird.

## Patentansprüche

1. Richtplatte zum parallelen Ausrichten der Frontrahmen von in eine Schalttafel (11) einzubauenden Schaltern (10), die eine Durchbrechung (2) aufweist, deren Querschnitt jenem des einzubauenden Schalters (10) entspricht, derart, dass dieser verdrehfest in die Durchbrechung (2) steckbar ist, dadurch gekennzeichnet, dass die Richtplatte (1) auf einer Durchmesserlinie (4) zu gegenüberliegenden Seiten eine U-förmige Ausnehmung (3) bzw. eine vorspringende Zunge (6) mit zur Durchmesserlinie (4) parallelen Flanken aufweist, welche im wesentlichen den gleichen Abstand zur Durchmesserlinie (4) haben, derart, dass jeweils zwei Richtplatten (1) nach Art einer Nut und Federverbindung ineinander schiebbar sind.

2. Richtplatte nach Anspruch 1, dadurch gekennzeichnet, dass die zur Durchmesserlinie (4) parallelen Flanken der Ausnehmung (3) höher sind als jene der Zunge (6).

**Revendications**

1. Plaque de mise à niveau pour aligner parallèlement le châssis frontal de disjoncteur (10) destiné à être monté sur un tableau électrique (11) et comportant un passage (2) dont la section correspond à celle du disjoncteur (10) à monter, de façon que ce disjoncteur puisse être enfiché solidairement en rotation dans le passage (2), plaque caractérisée en ce qu'elle (1) comporte sur les côtés diamétralement opposés sur un diamètre (4), des cavités (3) en forme de U et une languette (6) en saillie, avec des flancs parallèles au diamètre (4) et ayant principalement le même écartement par rapport au diamètre (4) de façon à ce que chaque fois deux plaques d'alignement (1) puissent être glissées l'une dans l'autre à la manière d'une liaison par rainure et clavette.

2. Plaque de mise à niveau selon la revendication 1, caractérisée en ce que les flancs de la cavité (3) parallèles au diamètre (4) sont pius hauts que ceux de la languette (6).


**Claims**

1. Levelling plate for the parallel alignment of the front frames of switches (10) to be installed into a control panel (11), which plate has an opening (2), the cross section of which corresponds to that of the switch (10) to be installed such that the latter can be plugged into the opening (2) in a manner secure with respect to torsion, characterised in that the levelling plate (1) has, on a diameter line (4) on opposing sides, a U-shaped recess (3) and a projecting tongue (6) respectively with flanks which are parallel to the diameter line (4) and which are at substantially the same distance from the diameter line (4) such that in each case two levelling plates (1) can be pushed into each other in the nature of a groove and tongue connection.

2. Levelling plate according to claim 1, characterised in that the flanks of the recess (3) which are parallel to the diameter line (4) are higher than those of the tongue (6).

**FIG. 1**

**FIG. 2**

FIG. 3

FIG.4